# FASCICULE DE BREVET EUROPEEN

(11) **EP 2 585 751 B1**
(45) Date de publication et mention de la délivrance du brevet: **30.04.2014**
(21) Numéro de dépôt: 11736418.2
(22) Date de dépôt: 20.06.2011
(51) Int. Cl.: F16L 33/04

(54) **COLLIER DE SERRAGE A SOYAGE**
KLEMME MIT EINEM GEFÜHRTEN VERBINDUNGSBEREICH
CLAMP HAVING A BOUNDED CONNECTION AREA

(30) Priorité: 23.06.2010 FR 1054984
(43) Date de publication de la demande: 01.05.2013
(73) Titulaire: Etablissements Caillau, 92130 Issy-les-Moulineaux (FR)
(72) Inventeur: RIGOLLET, Nicolas, F-41200 Romorantin (FR); PREVOT, Fabrice, F-41130 Selles sur Cher (FR); JACQUELIN, Arnault, F-41230 Mur de Sologne (FR); MESNARD, Eric, F-41250 Tours en Sologne (FR)
(74) Mandataire: Intès, Didier Gérard André
(86) Numéro de dépôt international: PCT/FR2011/051405
(87) Numéro de publication internationale: WO 2011/161364

(56) Documents cités:
- FR-A1- 2 305 625
- FR-A1- 2 522 086
- US-A- 5 191 683

## Description

La présente invention concerne un collier de serrage comprenant une ceinture métallique, deux oreilles de serrage espacées, reliées à la ceinture et aptes à être rapprochées l'une de l'autre pour serrer le collier, et une bavette de pontage qui coopère avec la ceinture pour ponter l'espace entre les oreilles, la ceinture comprenant une portion de recouvrement, qui porte la première oreille de serrage et dont la face interne présente un renfoncement dans lequel une première extrémité de la bavette pénètre lors du serrage du collier.

Ce type de collier de serrage est connu, pour des colliers dont la ceinture est plate, par le document FR 2 522 086.

Dans ce collier connu, la bavette de pontage se termine par une languette étroite, et le renfoncement forme, sur la face interne de la ceinture, un canal étroit dans lequel pénètre cette languette. La languette présente des côtés longitudinaux de grande longueur et est raccordée au reste de la bavette par des faces transversales, c'est-à-dire des faces orientées perpendiculairement à la direction longitudinale de la ceinture. De même, le canal formé par le renfoncement présente des côtés longitudinaux de grande longueur. Le canal et la languette sont sensiblement centrés sur une ligne longitudinale médiane de la ceinture et ont chacun une faible largeur, mesurée transversalement par rapport à la direction longitudinale, qui représente environ un quart à un tiers de la largeur de la ceinture.

Lorsque le collier est serré, la languette est logée dans le canal et, la profondeur de ce canal correspondant sensiblement à l'épaisseur de la languette, la face interne du collier offre sensiblement une continuité d'appui sur l'objet qui est serré par le collier. En effet, dans la région de la languette, cette continuité d'appui est offerte, d'une part, par les portions marginales de la ceinture située de part et d'autre du canal dans une direction transversale et, d'autre part, par la face interne de la languette. Cette continuité d'appui est importante pour certaines applications, en particulier lorsque l'objet qui est serré par le collier est une zone de raccordement entre deux conduits ou deux tubes, ou encore entre un tuyau et un embout, zone dans laquelle l'étanchéité est recherchée.

De plus en plus, les performances attendues des colliers de serrage sont importantes, en particulier en ce qui concerne les efforts de serrage, nécessaire à l'obtention d'une étanchéité performante.

Dans le même temps, des économies sont recherchées, de sorte que l'on cherche à utiliser le moins de matériau possible pour réaliser la ceinture. En d'autres termes, l'épaisseur de la ceinture est souvent relativement faible. Cependant, les ceintures d'épaisseur faible ont tendance à se déformer de manière non souhaitée sous l'effet des efforts de serrage importants mis en jeu, ces déformations pouvant conduire à une dégradation de la qualité du serrage et de l'étanchéité. On cherche donc, avec les contraintes évoquées ci-dessus, à utiliser les ceintures rigides capables, avec peu de matériau, de supporter des efforts de serrage importants.

La présente invention vise, en tenant compte des contraintes évoquées ci-dessus, à proposer un collier de serrage capable d'assurer une continuité d'appui sur l'objet qu'il serre, en étant capable également de supporter des efforts de serrage importants.

Ce but est atteint grâce au fait que le renfoncement formé sur la face interne de la portion de recouvrement est délimité par un premier soyage dont le fond forme, de part et d'autre d'une ligne longitudinale médiane de la ceinture, deux surfaces qui sont disposées sensiblement symétriquement par rapport à ladite ligne médiane, qui sont inclinées à la fois par rapport à la direction longitudinale et par rapport à la direction transversale de la ceinture, et qui s'étendent chacune sur une portion substantielle de la demi-largeur de la ceinture.

Selon l'invention, le fond du soyage qui délimite le renfoncement, c'est-à-dire la portion interne de ce soyage qui est en regard du bout libre de la première extrémité de la bavette, présente une forme très particulière.

En effet, la demanderesse a constaté que le fait de doter ce fond de deux surfaces inclinées par rapport aux directions longitudinale et transversale, et de faire en sorte que ces surfaces s'étendent sur des portions substantielles de la demi-largeur de la ceinture, permet de mettre le soyage à profit pour rigidifier la ceinture.

Ainsi, selon l'invention, le soyage offre la double fonction de ménager le renfoncement permettant d'obtenir une continuité d'appui sur l'objet qui est serré par le collier, et de renforcer localement la bande pour éviter des déformations non voulues, sous effort de serrage important.

Avantageusement, la première extrémité de la bavette présente deux bords libres inclinés se rejoignant en une pointe, l'inclinaison de ces deux bords libres étant sensiblement la même que l'inclinaison du fond du premier soyage.

Ainsi, la première extrémité de la bavette présente une forme adaptée à celle du fond du soyage, de sorte que, à l'état serré du collier, le bout libre de la bavette se trouve à proximité de ce fond sur la quasi-intégralité de son pourtour assurant ainsi une largeur significative d'appui de la ceinture sur l'objet qui est serré par le collier dans cette région.

De plus, comme indiqué en préambule, la première extrémité de la bavette pénètre dans le renfoncement lors du serrage du collier. Cependant, le serrage est opéré sur un objet qui est contraint en déformation radiale et qui, par la résistance qu'il oppose au serrage, a tendance à s'opposer également à la pénétration de la première extrémité de la bavette dans le renfoncement. Lorsque les effets en jeu sont particulièrement importants, une bavette réalisée sous la forme d'une languette étroite comme celle que divulgue FR 2 522 086 a du mal à pénétrer dans le renfoncement et a tendance à se replier sur elle-même dans le sens opposé à celui de son extension, sous l'effet des contre-efforts opposés par l'objet qui est en train d'être serré. La demanderesse a constaté que le fait de conformer la première extrémité de la bavette avec deux bords libres inclinés se rejoignant en une pointe permet de limiter considérablement ce phénomène. En quelque sorte, l'extrémité libre de la bavette est ainsi "profilée" et offre une excellente résistance aux efforts exercés par l'objet qui est serré par le collier et qui s'oppose à sa pénétration.

Avantageusement, la deuxième extrémité de la bavette est logée dans un renfoncement supplémentaire formé sur la face interne de la ceinture au voisinage de la deuxième oreille, le renfoncement supplémentaire étant délimité par un deuxième soyage dont le fond forme également, de part et d'autre d'une ligne longitudinale médiane de la ceinture, deux surfaces qui sont disposées sensiblement symétriquement par rapport à ladite ligne médiane, qui sont inclinées à la fois par rapport à la direction longitudinale et par rapport à la direction transversale de la ceinture, et qui s'étendent chacune sur une portion substantielle de la demi-largeur de la ceinture.

Dans ce cas, le renfoncement supplémentaire qui est réalisé au voisinage de la deuxième oreille de la ceinture permet également, à cet endroit, de rigidifier localement cette ceinture. De plus, la deuxième extrémité de la bavette est logée dans ce renfoncement et offre ainsi une continuité d'appui, ce qui permet de réaliser la bavette sous la forme d'une pièce distincte de la ceinture, qui est fixée à cette dernière par tout moyen approprié.

Dans ce cas, avantageusement, la deuxième extrémité de la bavette présente deux bords libres inclinés se rejoignant en une pointe, l'inclinaison de ces deux bords libres étant sensiblement la même que l'inclinaison du fond du deuxième soyage.

Ainsi, la deuxième extrémité de la bavette présente également une forme adaptée à celle du fond du soyage qui délimite le renfoncement supplémentaire, offrant ainsi, dans cette région, une largeur d'appui significative.

Avantageusement le fond du premier et/ou du deuxième soyage présente une forme sensiblement en V.

Une telle forme en V est particulièrement simple à réaliser et présente les avantages précités. Il est à noter que la pointe du V peut être réalisée sous la forme d'un angle vif, ou bien être légèrement arrondie ou aplatie.

Avantageusement, la deuxième extrémité de la bavette est solidaire d'une portion de la ceinture qui porte la deuxième oreille de serrage.

La bavette est alors réalisée sous la forme d'une pièce distincte de la ceinture, fixée à cette dernière.

Avantageusement, la deuxième extrémité de la bavette est fixée à la ceinture par sertissage ou clinchage.

D'autres modes de fixation, par exemple la soudure, sont également envisageables, mais le sertissage ou le clinchage présentent l'avantage d'être simples à réaliser, sans dégradation de surface du matériau dans lequel est réalisée la ceinture.

Avantageusement, l'un des éléments constitués par la deuxième extrémité de la bavette et par la ceinture présente au moins une première et une deuxième encoche respectivement situées sur chacun de ses bords longitudinaux, tandis que l'autre de ces éléments présente au moins une première et une deuxième saillie, respectivement situées sur chacun de ses bords longitudinaux et pénétrant respectivement dans la première et dans la deuxième encoche.

Ces moyens de fixation de la bavette à la ceinture sont particulièrement simples à réaliser, par les opérations mécaniques telles que des découpes locales, et un emboutissage.

Avantageusement, la ceinture présente une section creuse, de préférence sensiblement en V.

L'invention trouve une application particulièrement intéressante dans le domaine des colliers dont la ceinture présente une section creuse. De tels colliers servent en particulier à raccorder deux tubes dont les extrémités en vis-à-vis présentent des saillies d'appui qui pénètrent dans le creux formé par la section de la ceinture. Selon l'invention, les surfaces inclinées du fond du soyage sont combinées à la section creuse du collier. Ainsi, dans la région de ces surfaces, le matériau constituant la ceinture est déformé à la fois pour réaliser le soyage et pour former la section creuse. En particulier, les surfaces inclinées du soyage s'étendent sur les pans inclinés de la ceinture qui délimitent entre eux, sur la face interne de cette dernière, sa section creuse. Il en résulte que ces surfaces sont inclinées non seulement par rapport aux directions transversale et longitudinale de la ceinture, mais également par rapport à la direction radiale. Elles peuvent donc affecter des zones conséquentes en ce qui concerne la quantité de matériau en cause, ce qui dote localement la ceinture de zone d'écrouissage ayant une aire significative, renforçant considérablement sa rigidité.

L'invention sera bien comprise et ses avantages apparaîtront mieux à la lecture de la description détaillée qui suit, de modes de réalisation représentés à titre d'exemples non limitatifs. La description se réfère aux dessins annexés sur lesquels :
- la figure 1 est une vue de face d'un collier de serrage conforme à l'invention, selon un premier mode de réalisation ;
- la figure 2 est une vue en perspective permettant notamment de voir la face interne de la portion de recouvrement et la première extrémité de la bavette ;
- la figure 3 est également une vue en perspective, qui permet de voir en particulier la face interne de la ceinture dans la région de la deuxième extrémité de la bavette ;
- la figure 4 est une vue en perspective éclatée prise sous le même angle que la figure 3, mais sur laquelle la bavette est séparée de la ceinture pour une meilleure visualisation ;
- les figures 5A et 5B sont des vues partielles montrant la face interne du collier, respectivement selon les flèches VA et VB de la figure 1 ;
- la figure 5C montre une variante ;
- la figure 6 est une vue de face d'un collier de serrage conforme à l'invention, selon un deuxième mode de réalisation ;
- les figures 7A et 7B montrent la face interne du collier, respectivement selon les flèches VIIA et VIIB de la figure 6 ; et
- la figure 8 montre une variante pour la fixation de la bavette à la ceinture.

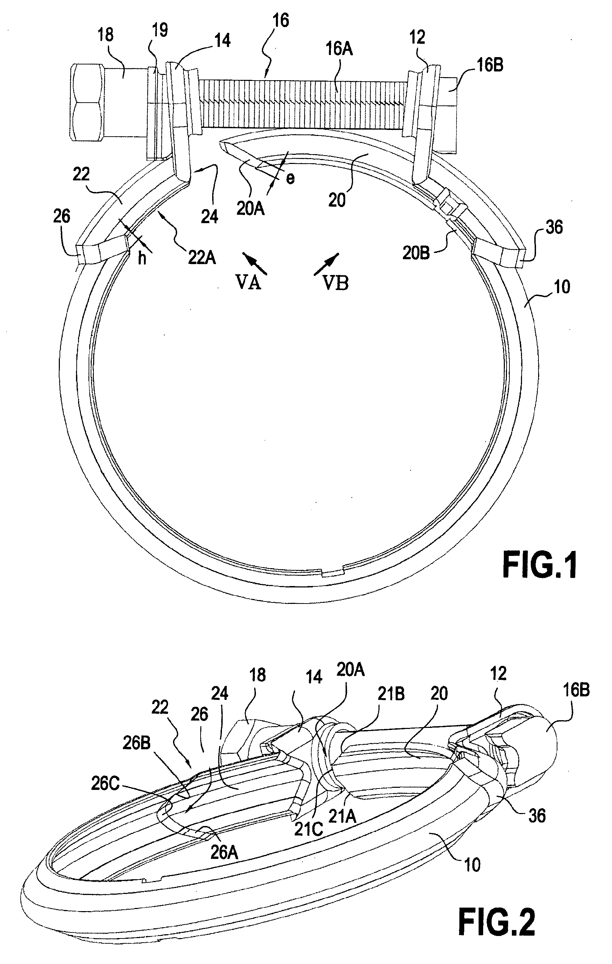

Le collier de serrage de la figure 1 comprend une ceinture métallique 10 et deux oreilles de serrage espacées, respectivement 12 et 14. De manière connue, les oreilles sont formées par des portions de la ceinture qui sont en saillie radiale et qui présentent des perçages traversés par le fût 16A d'une vis de serrage 16, coopérant avec des retenues de vissage en appui derrière les oreilles. Dans l'exemple représenté, ces retenues de vissage sont formées, d'une part, par la tête 16B de la vis 16 en appui derrière l'oreille 12, et par un écrou 18, en appui derrière l'oreille 14, par l'intermédiaire d'une rondelle d'entretoisement 19.

Le collier présente encore une bavette de pontage 20, dont on comprend qu'elle coopère avec la ceinture pour ponter l'espace entre les oreilles. Sur la figure 1, le collier est représenté à l'état non serré, et la première extrémité 20A de la bavette est légèrement écartée de la portion de la ceinture qui est en regard de cette première extrémité. En l'espèce, cette première extrémité est alors située entre les deux oreilles 12 et 14, au voisinage de l'oreille 14. On voit que la ceinture 10 présente une portion de recouvrement 22 dont on comprend que, à l'état serré du collier, elle sert à recouvrir la première extrémité 20A de la bavette. La face interne 22A de la portion de recouvrement 22 présente un renfoncement 24, mieux visible sur la figure 2, dans lequel la première extrémité 20A de la bavette peut pénétrer lors du serrage.

On voit que, du côté éloigné de l'oreille 14, le renfoncement 24 est délimité par un soyage 26 qui forme ainsi une marche sensiblement radiale dans la ceinture. La hauteur h du soyage, mesurée sur la face interne du renfoncement, correspond sensiblement à l'épaisseur e de la portion de bande métallique dans laquelle est formée la bavette 20. Ainsi, lorsque la première extrémité 20A de la bavette est logée dans le renfoncement, la face interne de la bavette est disposée dans la continuité de la face interne de la ceinture.

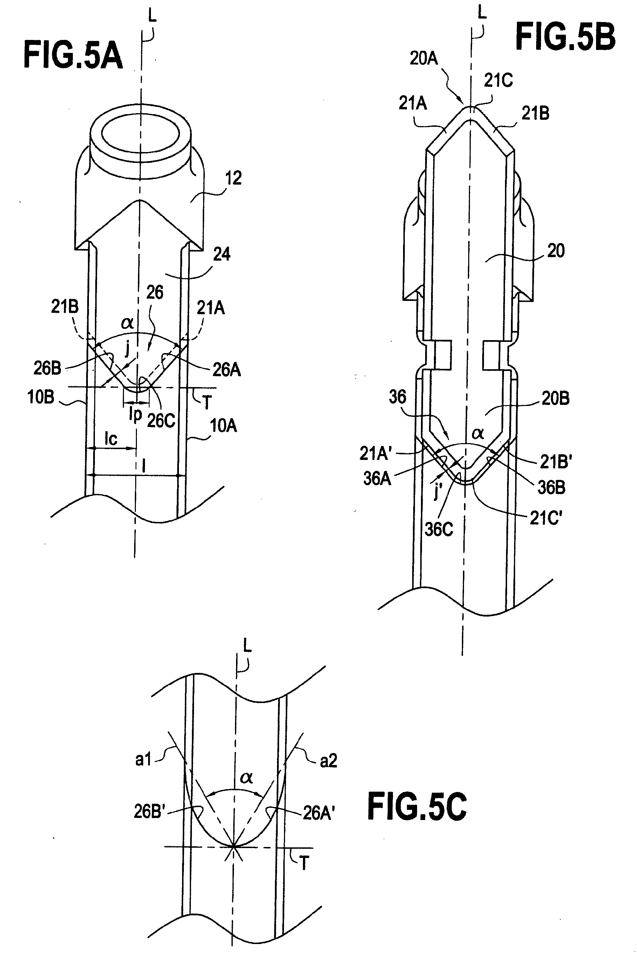

En se reportant en particulier aux figures 2 et 5A, on comprend que le fond du soyage 26, c'est-à-dire la surface interne du renfoncement 24 qui fait face à la première extrémité 20A de la bavette 20, forme, de part et d'autre d'une ligne longitudinale médiane de la ceinture, deux surfaces inclinées, respectivement 26A et 26B. Ces deux surfaces sont disposées sensiblement symétriquement par rapport à la ligne médiane L de la ceinture et elles sont inclinées à la fois par rapport à la direction longitudinale qui est celle de la ligne L, et par rapport à la direction transversale T de la ceinture.

On voit également que ces deux surfaces 26A et 26B s'étendent chacune sur une portion substantielle de la demi-largeur Ic de la ceinture 10. En l'occurrence, ces surfaces 26A et 26B s'étendent, à partir de leur jonction 26C située sur la ligne médiane L, jusqu'aux bords longitudinaux respectifs de la ceinture, respectivement 10A et 10B. La notion "portion substantielle de la demi-largeur de la ceinture" signifie l'intégralité ou la quasi-intégralité de cette demi-largeur et, en tout cas, au moins la moitié de cette demi-largeur et de préférence au moins 80 % de ladite demi-largeur.

On relève que le fond du soyage est symétrique par rapport à la ligne médiane longitudinale L.

En l'espèce, le fond du soyage 26 présente une forme sensiblement en V, ainsi qu'il est particulièrement visible dans la vue de dessous de la figure 5A. Dans cette vue de dessous, les surfaces 26A et 26B précédemment évoquées forment les deux branches du V, et se rejoignent en 26C à la pointe du V. On voit que cette pointe est légèrement arrondie et couvre ainsi une largeur Ip de l'ordre d'environ un cinquième de la largeur totale I de la ceinture, mesurée selon la direction transversale T de la ceinture.

Dans l'exemple représenté, les branches du V formé par les surfaces 26A et 26B sur la figure 5A, sont rectilignes. Elles pourraient également, sans sortir du cadre de l'invention, être légèrement courbes, comme indiqué sur la figure 5C, respectivement par les références 26A' et 26B', la symétrie par rapport à la ligne L étant de préférence conservée.

Sur la figure 5A, on a indiqué par la référence α l'angle interne que forment entre elles les branches du V formées par les surfaces 26A et 26B. Cet angle α est de l'ordre de 60° à 90°, de préférence de l'ordre de 70° à 80°.

De même, sur la figure 5C, on a indiqué l'angle interne α qui est délimité entre les deux lignes a1 et a2 définies chacune, par l'intersection du fond du soyage avec la ligne médiane longitudinale L et par l'extrémité des surfaces inclinées 26A' et 26B' opposées à cette intersection. Sur cette figure, l'angle α formé entre ces deux lignes a1 et a2 qui correspondent à l'angle entre les branches inclinées du fond du soyage, est également de l'ordre de 60° à 90°, et de préférence de l'ordre de 70° à 80°.

Sur les figures 2 et 5B, on voit que la première extrémité 20A de la bavette 20 présente deux bords libres inclinés, respectivement 21A et 21B, se rejoignant en une pointe 21C, qui est située sur la ligne longitudinale médiane L de la ceinture. On constate également que l'inclinaison de ces bords libres est sensiblement la même que l'inclinaison des deux surfaces 26A et 26B du fond du soyage 26.

Sur la figure 5A, on a indiqué en trait interrompu la position de la première extrémité de la bavette dans le renfoncement 24 en situation serrée du collier. On voit que les bords libres 21A et 21B de la première extrémité de la bavette sont respectivement en regard des surfaces 26A et 26B du fond du soyage. En l'espèce, ces bords libres sont rectilignes en vue de dessous, mais ils pourraient également avoir la même forme courbe que le fond du soyage représenté à la figure 5C.

A l'état serré du collier, les bords libres de la première extrémité de la bavette sont situés à proximité du fond du soyage et l'on comprend que la face intérieure du collier est en appui sur l'objet qui est serré par le collier, même dans la région de la première extrémité de la bavette qui est proche du fond du soyage. La seule légère discontinuité d'appui est due au jeu j entre l'extrémité libre de la bavette et le fond du soyage. Cette légère discontinuité ne nuit pas à la continuité globale de l'appui puisque, si l'on trace une ligne transversale au collier dans la zone de ce collier dans laquelle ce jeu j est constaté, cette ligne croise toujours des parties pleines d'appui, qui sont formées soit dans la ceinture, au voisinage du fond du soyage, soit dans la bavette, ces parties pleines représentant une largeur de serrage pratiquement égale à la largeur de la ceinture. Par ailleurs, la bavette sert évidemment à ponter l'espace entre les oreilles 12 et 14. Ainsi, avec sa première extrémité engagée dans le renfoncement 24, la bavette 20 permet de réaliser une continuité globale de l'appui du collier sur l'objet qu'il serre.

En considérant maintenant les figures 1, 3, 4 et 5B, on voit que la deuxième extrémité 20B de la bavette 20 est logée dans un renfoncement supplémentaire 34 qui est formé sur la face interne de la ceinture, au voisinage de l'oreille 12. On constate également que ce renfoncement supplémentaire est délimité par un deuxième soyage 36, dont le fond forme également, de part et d'autre de la ligne longitudinale médiane L, deux surfaces inclinées, respectivement 36A et 36B. En fait, en comparant ces figures avec les figures 1, 2 et 5A, on constate que les soyages qui délimitent respectivement le renfoncement 24 et le renfoncement 34 sont analogues.

Ainsi, la description qui précède relative au soyage 26 est également applicable au soyage 36. En particulier, les deux surfaces 36A et 36B se rejoignent en une pointe 36C située sur la ligne longitudinale médiane L, et ces surfaces peuvent, en vue de dessous, former des lignes rectilignes ou courbes.

Par ailleurs, la deuxième extrémité 20B de la bavette est analogue à sa première extrémité 20A et l'on voit en particulier qu'elle présente deux bords libres, respectivement 21B' et 21A' se rejoignant en une pointe 21C'. La deuxième extrémité 20B de la bavette 20 est ainsi logée dans le renfoncement supplémentaire 34 et l'on voit en particulier sur la figure 5B que l'inclinaison des deux bords libres 21A' et 21B' correspond sensiblement à celle du fond du soyage 36 et que la bavette est fixée à la ceinture de telle sorte que ces bords libres viennent à proximité immédiate des surfaces 36A et 36B. Le léger jeu est donc comparable au jeu j évoqué précédemment, et est même souvent plus faible. Compte tenu des formes respectives du fond du soyage 36 et de la deuxième extrémité de la bavette 20, ce jeu ne nuit pas à la continuité d'appui de la ceinture du collier sur l'objet à serrer puisque, si l'on trace une ligne transversale passant par ce jeu, cette ligne rencontre toujours des parties pleines de la ceinture ou de la bavette, ces parties pleine représentant une largeur de serrage pratiquement égale à la largeur de la ceinture.

Dans ce premier mode de réalisation, la bavette est constituée par une portion de bande métallique rapportée et fixée à la ceinture du collier. Plus précisément, la deuxième extrémité 20B de la bavette est solidaire de la portion de la ceinture qui porte la deuxième oreille de serrage 12.

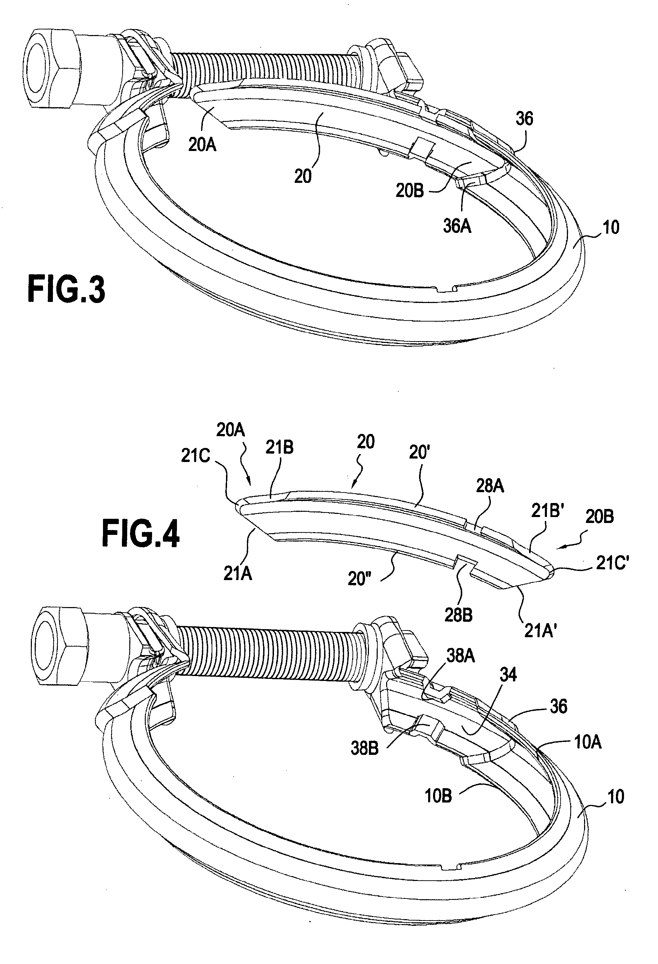

En l'espèce, la fixation de la bavette à la ceinture est réalisée par une fixation purement mécanique, sans soudure. En se reportant en particulier à la figure 4, on voit que la deuxième extrémité 20B de la bavette présente deux encoches, respectivement 28A et 28B situées en vis-à-vis, respectivement sur chacun de ses bords longitudinaux, 20' et 20". De son côté, la ceinture présente des saillies qui pénètrent dans ces encoches.

En l'espèce, on voit que ces saillies sont formées par deux bossages, respectivement 38A et 38B respectivement situés sur chacun des bords longitudinaux 10A et 10B de la ceinture 10. Comme on le voit sur la figure 3, ces bossages sont encastrés dans les encoches 28A et 28B. En l'espèce, dans la mesure où la ceinture et la bavette présentent une section creuse, les fonds longitudinaux des encoches 28A et 28B sont inclinés et sont donc retenus par les bords internes des bossages 38A et 38B.

La face externe de la bavette se trouve ainsi parfaitement plaquée contre la face interne du renfoncement 34 et la bavette est ainsi maintenue par rapport à la ceinture. On constate que les encoches 28A et 28B sont formées à une légère distance du bout libre d'extrémité de la deuxième extrémité 20B de la bavette 20.

Le fait de réaliser les saillies qui pénètrent dans les encoches sous la forme de bossages favorise également la rigidité de la partie du collier qui les porte, par opposition au cas où les saillies auraient des bords découpés.

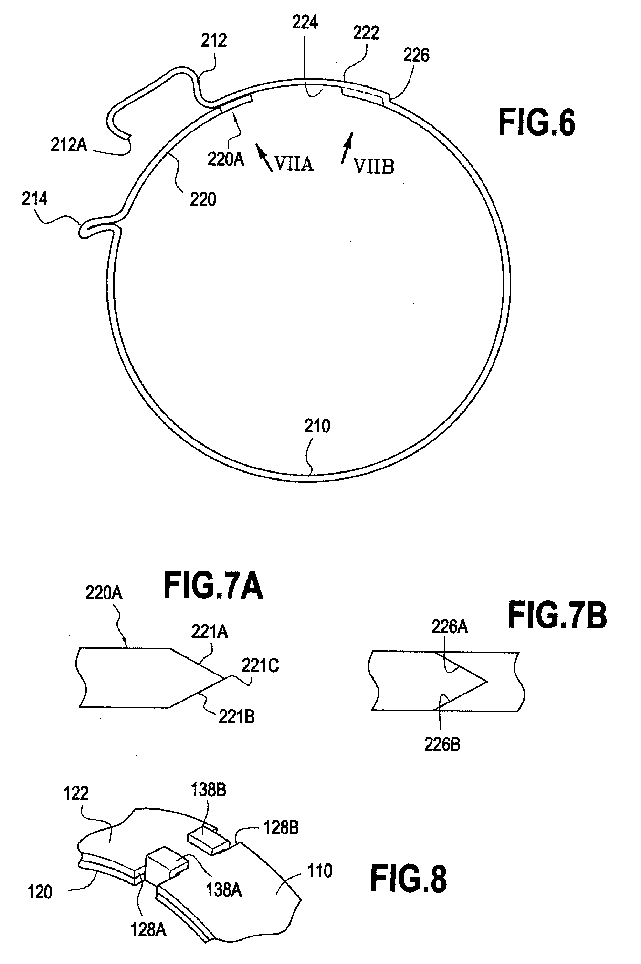

Comme on l'a indiqué sur la vue partielle en perspective de la figure 8, on peut également concevoir que les encoches 128A, 128B soient réalisées dans la ceinture 110, et que les saillies qui pénètrent dans ces encoches pour retenir la bavette par rapport à la ceinture soient réalisées dans la bavette 120. Par exemple, comme représenté sur la figure 8, ces saillies peuvent prendre la forme de pattes 138A et 138B qui sont découpées sur les bords de la bavette, redressées radialement et repliées sur le dessus de la bande, au-delà des bords longitudinaux des encoches 128A et 128B.

Le collier des figures 1 à 5B est un collier à section intérieure creuse. Ce collier sert en particulier à fixer entre elles, les extrémités de deux tubes en bout à bout, présentant des collerettes saillantes qui pénètrent dans l'intérieur de la section creuse du collier. On constate que la section creuse a sensiblement une forme en V, particulièrement adaptée lorsque les surfaces d'appui des collerettes des tubes sont inclinées par rapport à la direction axiale des tubes de manière à former des surfaces tronconiques.

Comme indiqué dans la partie introductive de la présente demande, le fait de réaliser le fond du ou des soyages de la ceinture avec des surfaces inclinées, en particulier des surfaces en V, est particulièrement avantageux pour des colliers ayant une telle section creuse. En effet, l'écrouissage opéré dans la région du ou des soyages est alors particulièrement important et affecte une quantité de matière relativement conséquente, de sorte que la rigidité de la ceinture est particulièrement renforcée.

L'invention trouve également toutefois son application pour un collier dont la ceinture a une section plate, ainsi qu'il est représenté aux figures 6 à 7B.

Le collier représenté sur la figure 6 comporte une ceinture 210 à section plate, et des oreilles de serrage 212 et 214. En l'espèce, le serrage est opéré par accrochage, et les oreilles comprennent une première oreille 212 en forme de crochet et une deuxième oreille 214 en forme de pli s'étendant radialement vers l'extérieur. On comprend que, pour le serrage, le bord 212A du crochet vient s'accrocher derrière l'oreille 214. Bien entendu, ces moyens de serrage ne sont donnés qu'à titre d'exemples, le serrage pouvant également s'opérer, par exemple, par vissage, comme sur les figures précédentes et comme représenté dans FR 2 522 086.

En l'espèce, le collier est réalisé en une seule pièce et l'on voit que la bavette 220 est formée par un prolongement de la ceinture, au-delà du pli 214. Lorsque le collier est serré, cette bavette vient se loger dans le renfoncement 224 formé dans la portion de recouvrement située derrière le crochet 212. Ce renfoncement 224 est délimité par un soyage 226 dont on comprend, en considérant en particulier la figure 7B, que son fond présente deux surfaces inclinées, respectivement 226A et 226B. En l'espèce, il est réalisé avec une forme en V, les deux surfaces inclinées formant les deux branches d'un V en vue de dessous. Lorsque le collier est serré, la première extrémité 220A de la bavette 220 pénètre dans le renfoncement 224 jusqu'à venir à proximité du fond du soyage 226. Comme on le voit sur la figure 7A, cette première extrémité 220A présente deux bords libres inclinés, respectivement 221A et 221B, se rejoignant en une pointe 221C. Ils présentent sensiblement la même inclinaison que le fond du soyage 226.

Le soyage 226 peut être analogue aux soyages 26 et 36 précédemment évoqués, à ceci près qu'il est réalisé dans une bande plate, c'est-à-dire, dont la section n'est pas creuse. En fait, ceci signifie que, en vue de dessous, c'est-à-dire depuis le côté intérieur de la bande, le soyage 226 peut avoir la même forme que les soyages 26 et 36. En particulier, il peut avoir une forme en V comme représenté sur la figure 7B, ou bien avoir une forme s'approchant de celle d'un V, mais dont les deux branches seraient courbes, pour former une parabole inversée, comme représenté sur la figure 5C. De même, l'extrémité 220A de la bavette 220 peut avoir la même forme que la première extrémité de la bavette 20 précédemment décrite, à ceci près que sa section est plate.

Le fond du soyage 226 présente de préférence une symétrie par rapport à la ligne longitudinale médiane de la ceinture. Il en va de même pour la bavette 220 et, en particulier, pour son extrémité 220A.

## Revendications

1. Collier de serrage comprenant une ceinture métallique (10, 110 ; 210), deux oreilles de serrage (12, 14 ; 212, 214) espacées, reliées à la ceinture et aptes à être rapprochées l'une de l'autre pour serrer le collier, et une bavette de pontage (20 ; 120 ; 220) qui coopère avec la ceinture pour ponter l'espace entre les oreilles, la ceinture comprenant une portion de recouvrement (22 ; 122 ; 222), qui porte la première oreille de serrage (14) et dont la face interne (22A) présente un renfoncement (24 ; 224) dans lequel une première extrémité (20A ; 220A) de la bavette pénètre lors du serrage du collier,
**caractérisé en ce que** le renfoncement (24 ; 224) formé sur la face interne de la portion de recouvrement est délimité par un premier soyage (26 ; 226) dont le fond forme, de part et d'autre d'une ligne longitudinale médiane (L) de la ceinture (10 ; 110 ; 210), deux surfaces (26A, 26B ; 226A, 226B) qui sont disposées sensiblement symétriquement par rapport à ladite ligne médiane, qui sont inclinées à la fois par rapport à la direction longitudinale (L) et par rapport à la direction transversale (T) de la ceinture, et qui s'étendent chacune sur une portion substantielle de la demi-largeur (Ic) de la ceinture (10).

2. Collier de serrage selon la revendication 1, **caractérisé en ce que** la première extrémité (20A ; 220A) de la bavette (20 ; 120 ; 220) présente deux bords libres inclinés (21A, 21B ; 221A, 221B) se rejoignant en une pointe (21C ; 221C), l'inclinaison de ces deux bords libres étant sensiblement la même que l'inclinaison des deux surfaces (26A, 26B ; 226A, 226B) du fond du premier soyage (26 ; 226).

3. Collier de serrage selon la revendication 1 ou 2, **caractérisé en ce que** la deuxième extrémité (20B) de la bavette (20 ; 120) est logée dans un renfoncement supplémentaire (34) formé sur la face interne de la ceinture au voisinage de la deuxième oreille (12), le renfoncement supplémentaire étant délimité par un deuxième soyage (36) dont le fond forme également, de part et d'autre d'une ligne longitudinale médiane (L) de la ceinture, deux surfaces (36A, 36B) qui sont disposées sensiblement symétriquement par rapport à ladite ligne médiane, qui sont inclinées à la fois par rapport à la direction longitudinale (L) et par rapport à la direction transversale (T) de la ceinture, et qui s'étendent chacune sur une portion substantielle de la demi-largeur (Ic) de la ceinture.

4. Collier de serrage selon la revendication 3, **caractérisé en ce que** la deuxième extrémité (20B) de la bavette (20) présente deux bords libres inclinés (21A', 21B') se rejoignant en une pointe (21C), l'inclinaison de ces deux bords libres étant sensiblement la même que l'inclinaison du fond du deuxième soyage (36).

5. Collier de serrage selon l'une quelconque des revendications 1 à 4, **caractérisé en ce que** le fond du premier soyage (26 ; 226) présente une forme sensiblement en V.

6. Collier de serrage selon la revendication 3 et l'une quelconque des revendications 1 à 5, **caractérisé en ce que** le fond du deuxième soyage (36) présente une forme sensiblement en V.

7. Collier de serrage selon la revendication 5 ou 6, **caractérisé en ce que** les branches du V forment entre elles un angle interne (α) de 60° à 90°, de préférence de l'ordre de 70° à 80°.

8. Collier de serrage selon l'une quelconque des revendications 1 à 7, **caractérisé en ce que** la deuxième extrémité (20B) de la bavette (20 ; 120) est solidaire d'une portion de la ceinture (10 ; 110) qui porte la deuxième oreille de serrage (12).

9. Collier de serrage selon la revendication 8, **caractérisé en ce que** la deuxième extrémité (20B) de la bavette (20) est fixée à la ceinture (10) par sertissage ou clinchage.

10. Collier de serrage selon la revendication 8, **caractérisé en ce que** l'un des éléments constitués par la deuxième extrémité (20B) de la bavette (20 ; 120) et par la ceinture (10, 110) présente au moins une première et une deuxième encoche (28A, 28B ; 128A, 128B) respectivement situées sur chacun de ses bords longitudinaux, tandis que l'autre de ces éléments présente au moins une première et une deuxième saillie (38A, 38B ; 138A, 138B), respectivement situées sur chacun de ses bords longitudinaux et pénétrant respectivement dans la première et dans la deuxième encoche.

11. Collier de serrage selon la revendication 10, **caractérisé en ce que** la deuxième extrémité (20B) de la bavette (20) présente au moins une première et une deuxième encoche (28A, 28B) respectivement situées sur chacun de ses bords longitudinaux (20', 20"), tandis que la face interne de la ceinture présente au moins un premier et un deuxième bossage (38A, 38B), respectivement situées sur chacun des bords longitudinaux de la ceinture et pénétrant respectivement dans la première et dans la deuxième encoche.

12. Collier de serrage selon l'une quelconque des revendications 1 à 11, **caractérisé en ce que** les oreilles de serrage (12, 14) sont formées par des portions de la ceinture (10) en saillie radiale et présentent des perçages traversés par le fût (16A) d'une vis de serrage (16) coopérant avec des retenues de vissage (16B, 18) en appui derrière les oreilles.

13. Collier de serrage selon l'une quelconque des revendications 1 à 12, **caractérisé en ce que** la ceinture (10) présente une section creuse.

14. Collier de serrage selon la revendication 13, **caractérisé en ce que** la section creuse est sensiblement en V.

## Patentansprüche

1. Klemmschelle, umfassend einen Metallring (10, 110; 210), zwei Klemmösen (12, 14; 212, 214), die beabstandet, mit dem Ring verbunden und geeignet sind, einander genähert zu werden, um die Schelle festzuziehen, sowie einen Überbrückungsstreifen (20; 120; 220), der mit dem Ring zusammenwirkt, um den Raum zwischen den Ösen zu überbrücken, wobei der Ring einen Deckabschnitt (22; 122; 222) umfasst, der die erste Klemmöse (14) trägt und dessen Innenseite (22A) eine Vertiefung (24; 224) aufweist, in die ein erstes Ende (20A; 220A) des Streifens während des Festziehens der Schelle eindringt,
**dadurch gekennzeichnet, dass** die an der Innenseite des Deckabschnittes ausgebildete Vertiefung (24; 224) durch einen ersten Durchzug (26; 226) begrenzt ist, dessen Grund auf beiden Seiten einer Mittellängslinie (L) des Rings (10; 110; 210) zwei Flächen (26A, 26B; 226A, 226B) bildet, die zu der Mittellinie im Wesentlichen symmetrisch angeordnet sind, die sowohl in Bezug auf die Längsrichtung (L) als auch in Bezug auf die Querrichtung (T) des Rings geneigt sind und die sich jeweils über einen wesentlichen Abschnitt der halben Breite (Ic) des Rings (10) erstrecken.

2. Klemmschelle nach Anspruch 1, **dadurch gekennzeichnet, dass** das erste Ende (20A; 220A) des Streifens (20; 120; 220) zwei geneigte freie Ränder (21 A, 21 B; 221 A, 221 B), die an einer Stelle (21 C; 221 C) zusammenlaufen, aufweist, wobei die Neigung dieser beiden freien Ränder im Wesentlichen die gleiche ist, wie die Neigung der beiden Flächen (26A, 26B; 226A, 226B) des Grundes des ersten Durchzugs (26; 226).

3. Klemmschelle nach Anspruch 1 oder 2, **dadurch gekennzeichnet, dass** das zweite Ende (20B) des Streifens (20; 120) in einer zusätzlichen Vertiefung (34), die an der Innenseite des Rings in der Nähe der zweiten Öse (12) ausgebildet ist, aufgenommen ist, wobei die zusätzliche Vertiefung durch einen zweiten Durchzug (36) begrenzt ist, dessen Grund ebenfalls auf beiden Seiten einer Mittellängslinie (L) des Rings zwei Flächen (36A, 36B) bildet, die zu der Mittellinie im Wesentlichen symmetrisch angeordnet sind, die sowohl in Bezug auf die Längsrichtung (L) als auch in Bezug auf die Querrichtung (T) des Rings geneigt sind und die sich jeweils über einen wesentlichen Abschnitt der halben Breite (Ic) des Rings erstrecken.

4. Klemmschelle nach Anspruch 3, **dadurch gekennzeichnet, dass** das zweite Ende (20B) des Streifens (20) zwei geneigte freie Ränder (21A', 21 B'), die an einer Stelle (21 C') zusammenlaufen, aufweist, wobei die Neigung dieser beiden freien Ränder im Wesentlichen die gleiche ist, wie die Neigung des Grundes des zweiten Durchzugs (36).

5. Klemmschelle nach einem der Ansprüche 1 bis 4, **dadurch gekennzeichnet, dass** der Grund des ersten Durchzugs (26; 226) im Wesentlichen eine V-Form aufweist.

6. Klemmschelle nach Anspruch 3 und einem der Ansprüche 1 bis 5, **dadurch gekennzeichnet, dass** der Grund des zweiten Durchzugs (36) im Wesentlichen eine V-Form aufweist.

7. Klemmschelle nach Anspruch 5 oder 6, **dadurch gekennzeichnet, dass** die Schenkel des V zwischen sich einen Innenwinkel (α) von 60° bis 90°, vorzugsweise in der Größenordnung von 70° bis 80° bilden.

8. Klemmschelle nach einem der Ansprüche 1 bis 7, **dadurch gekennzeichnet, dass** das zweite Ende (20B) der Streifens (20; 120) mit einem Abschnitt des Rings (10; 110) fest verbunden ist, der die zweite Klemmöse (12) trägt.

9. Klemmschelle nach Anspruch 8, **dadurch gekennzeichnet, dass** das zweite Ende (20B) des Streifens (20) an dem Ring (10) durch Crimpen oder Clinchen befestigt ist.

10. Klemmschelle nach Anspruch 8, **dadurch gekennzeichnet, dass** eines der Elemente, die durch das zweite Ende (20B) des Streifens (20; 120) und durch den Ring (10, 110) gebildet sind, wenigstens eine erste und eine zweite Nut (28A, 28B; 128A, 128B) aufweist, die jeweils an jedem seiner Längsränder gelegen sind, während das andere dieser Elemente wenigstens einen ersten und einen zweiten Vorsprung (38A, 38B; 138A, 138B) aufweist, die sich jeweils an jedem seiner Längsränder befinden und in die erste bzw. in die zweite Nut eindringen.

11. Klemmschelle nach Anspruch 10, **dadurch gekennzeichnet, dass** das zweite Ende (20B) des Streifens (20) wenigstens eine erste und eine zweite Nut (28A, 28B) aufweist, die jeweils an jedem seiner Längsränder (20', 20") gelegen sind, während die Innenseite des Rings wenigstens einen ersten und einen zweiten Buckel (38A, 38B) aufweist, die sich jeweils an jedem der Längsränder des Rings befinden und in die erste bzw. in die zweite Nut eindringen.

12. Klemmschelle nach einem der Ansprüche 1 bis 11, **dadurch gekennzeichnet, dass** die Klemmösen (12, 14) durch radial vorspringende Abschnitte des Rings (10) gebildet sind und Bohrungen aufweisen, welche von dem Schaft (16A) einer Klemmschraube (16) durchgriffen sind, der mit hinter den Ösen anliegenden Schraubhaltern (16B, 18) zusammenwirkt.

13. Klemmschelle nach einem der Ansprüche 1 bis 12, **dadurch gekennzeichnet, dass** der Ring (10) einen hohlen Querschnitt aufweist.

14. Klemmschelle nach Anspruch 13, **dadurch gekennzeichnet, dass** der hohle Querschnitt im Wesentlichen V-förmig ist.

## Claims

1. A clamping collar comprising a metal belt (10, 110; 210), two spaced-apart tightening lugs (12, 14; 212, 214) connected to the belt and suitable for being brought towards each other in order to tighten the collar, and a bridging plate (20; 120; 220) that co-operates with the belt to bridge the gap between the lugs, the belt including an overlap portion (22; 122; 222) that carries the first tightening lug (14) and that has its inside face (22A) provided with a setback (24; 224) into which a first end (20A; 220A) of the plate penetrates during tightening of the collar;
said clamping collar being **characterized in that** the setback (24; 224) formed in the inside face of the overlap portion is defined by a first joggle (26; 226) having an end wall that forms two surfaces (26A, 26B; 226A, 226B) on either side of the longitudinal midline (L) of the belt (10; 110; 210), which surfaces are disposed substantially symmetrically about said midline, and are inclined both relative to the longitudinal direction (L) and relative to the transverse direction (T) of the belt, and each of which surfaces extends over a substantial fraction of the half-width (ℓc) of the belt (10).

2. A clamping collar according to claim 1, **characterized in that** the first end (20A; 220A) of the plate (20; 120; 220) has two inclined free edges (21A, 21B; 221A, 221B) that meet at a tip (21C; 221C), the inclination of these two free edges being substantially the same as the inclination of the two surfaces (26A, 26B; 226A, 226B) of the end wall of the first joggle (26; 226).

3. A clamping collar according to claim 1 or claim 2, **characterized in that** the second end (20B) of the plate (20; 120) is received in an additional setback (34) formed in the inside face of the belt in the vicinity of the second lug (12), the additional setback being defined by a second joggle (36) also having an end wall that forms two surfaces (36A, 36B) on either side of the longitudinal midline (L) of the belt, which surfaces are disposed substantially symmetrically about said midline, and are inclined both relative to the longitudinal direction (L) and relative to the transverse direction (T) of the belt, and each of which surfaces extends over a substantial fraction of the half-width (ℓc) of the belt.

4. A clamping collar according to claim 3, **characterized in that** the second end (20B) of the plate (20) has two inclined free edges (21A', 21B') that meet at a tip (21C'), the inclination of these two free edges being substantially the same as the inclination of the end wall of the second joggle (36).

5. A collar according to any one of claims 1 to 4, **characterized in that** the end wall of the first joggle (26; 226) is substantially V-shaped.

6. A clamping collar according to claim 3 and to any one of claims 1 to 5, **characterized in that** the end wall of the second joggle (36) is substantially V-shaped.

7. A clamping collar according to claim 5 or claim 6, **characterized in that** the branches of the V-shape form an internal angle (α) between them that lies in the range 60° to 90°, and preferably in the range 70° to 80°.

8. A clamping collar according to any one of claims 1 to 7, **characterized in that** the second end (20B) of the plate (20; 120) is secured to a portion of the belt (10; 110) that carries the second tightening lug (12).

9. A clamping collar according to claim 8, **characterized in that** the second end (20B) of the plate (20) is fastened to the belt (10) by crimping or clinching.

10. A clamping collar according to claim 8, **characterized in that** one of the elements constituted by the second end (20B) of the plate (20; 120) and by the belt (10, 110) has at least first and second notches (28A, 28B; 128A, 128B) situated in respective ones of its longitudinal edges, while the other of said elements has at least first and second projections (38A, 38B; 138A, 138B) situated on respective ones of its longitudinal edges and penetrating respectively into the first notch and into the second notch.

11. A clamping collar according to claim 10, **characterized in that** the second end (20B) of the plate (20) has at least first and second notches (28A, 28B) situated in respective ones of its longitudinal edges (20', 20"), while the inside face of the belt has at least first and second bosses (38A, 38B) on respective ones of the longitudinal edges of the belt and penetrating into respective ones of the first and second notches.

12. A clamping collar according to any one of claims 1 to 11, **characterized in that** the tightening lugs (12, 14) are formed by portions of the belt (10) that project radially and that are provided with holes through which the shank (16A) of a tightening screw (16) passes, which shank co-operates with screw retainers (16B, 18) bearing against the backs of the lugs.

13. A clamping collar according to any one of claims 1 to 12, **characterized in that** the belt (10) is of substantially recessed cross-section.

14. A clamping collar according to claim 13, **characterized in that** the recessed cross-section is substantially V-shaped.
